# EUROPEAN PATENT APPLICATION

(11) **EP 3 418 962 A1**
(43) Date of publication of application: **26.12.2018**
(21) Application number: 18179065.0
(22) Date of filing: 21.06.2018
(51) Int. Cl.: G06Q 20/32, G06Q 20/40

(54) **PUBLIC TRANSIT PAYMENT METHOD AND DEVICE**

(30) Priority: 22.06.2017 CN 201710482717
(71) Applicant: Beijing Xiaomi Mobile Software Co., Ltd., Beijing 100085 (CN)
(72) Inventor: CHEN, Kai, Beijing, 100085 (CN); CHAI, Along, Beijing, 100085 (CN); LIU, Chengxin, Beijing, 100085 (CN)
(74) Representative: Hughes, Andrea Michelle

(57) **Abstract**

The present disclosure relates to a public transit payment method and device. The method includes: when it is detected that a balance of a first virtual public transit card associated with a prepaid public transit card is smaller than a first preset balance threshold, a first charging request containing an identifier of the first virtual public transit card is sent to a server, wherein the prepaid public transit card is associated with at least one virtual public transit card; a charging response for the first virtual public transit card is received; and a public transit payment operation is performed by using the first virtual public transit card. According to the present disclosure, a virtual public transit card charging process may be automatically initiated, a user is not required to maintain a charging matter of each virtual public transit card, a manual charging operating process of the user is eliminated, and a user experience is improved.

## Description

### TECHNICAL FIELD

The present disclosure generally relates to the technical field of terminal application, and more particularly, to a public transit payment method and device.

### BACKGROUND

At present, Near Field Communication (NFC) modules have gradually become a standard configuration of flagship phones of each mobile phone manufacturer. Providing public transit card service for a user by using a card simulation function of NFC of a mobile phone is a favorite function for the user, and is also a field that each mobile phone manufacturer and even a bank card association rapidly follow and fiercely compete for.

In existing technology, mobile phone manufacturers usually access public transit card companies by: connecting all-purpose card management equipment of each city one by one and displaying public transit service of these cities to users through wallet clients in a centralized manner. A user sees public transit card entries of multiple cities on a mobile phone. The user selects his/her own required city for public transit card issuing and charging, and installs a public transit card of this city in the mobile phone of the user, and then the user may use municipal public transit service. In this way, every time when arriving at a new city, the user is required to install a local public transit card, and can start use after charging the public transit card.

### SUMMARY

Accordingly, embodiments of the present disclosure provide a public transit payment method and device, in accordance with claims which follow.

According to a first aspect of the embodiments of the present disclosure, there is provided a public transit payment method, which is applied to a terminal and includes:
when it is detected that a balance of a first virtual public transit card associated with a prepaid public transit card is smaller than a first preset balance threshold, a first charging request containing an identifier of the first virtual public transit card is sent to a server, wherein the prepaid public transit card may be associated with at least one virtual public transit card;
a charging response for the first virtual public transit card is received; and
a public transit payment operation is performed by using the first virtual public transit card.

The technical solution provided by the embodiment of the present disclosure may achieve the following beneficial effects: in the technical solution, when it is detected that the balance of the first virtual public transit card associated with the prepaid public transit card is insufficient, the charging request is automatically sent to the server, the public transit payment operation may be performed by using the first virtual public transit card to automatically initiate a virtual public transit card charging process after the charging response is received, a user is not required to maintain a charging matter of each virtual public transit card, a manual charging operating process of the user is eliminated, and a user experience is improved.

According to an exemplary embodiment, the first preset balance threshold may include: a maximum single public transit consumption value of a target city or a double of the maximum single public transit consumption value of the target city.

According to an exemplary embodimentiment, the method may further include that:
a current position is acquired; and
the first virtual public transit card is activated, the first virtual public transit card being associated with the current position.

According to an exemplary embodiment, the method may further include that:
preconfigured information of a unified card face is acquired; and
the prepaid public transit card is displayed according to the information of the unified card face, wherein more than one virtual public transit card associated with the prepaid public transit card may be locally stored.

According to an exemplary embodiment, the method may further include that:
when it is determined that a balance of the prepaid public transit card is smaller than a second preset balance threshold, a user is prompted to charge the prepaid public transit card.

According to a second aspect of the embodiments of the present disclosure, there is provided a public transit payment device, which includes:
a first sending module arranged to, when it is detected that a balance of a first virtual public transit card associated with a prepaid public transit card is smaller than a first preset balance threshold, send a first charging request containing an identifier of the first virtual public transit card to a server, wherein the prepaid public transit card may be associated with at least one virtual public transit card;
a receiving module arranged to receive a charging response for the first virtual public transit card; and
a payment module arranged to perform a public transit payment operation by using the first virtual public transit card.

According to an exemplary embodiment, the device may further include:
a first acquisition module arranged to acquire a current position; and
an activation module arranged to activate the first virtual public transit card, the first virtual public transit card being associated with the current position.

The advantages and technical effects of the device according to the invention correspond to those of the method presented above.

According to an exemplary embodiment, the device may further include:
a second acquisition module arranged to acquire preconfigured information of a unified card face; and
a display module arranged to display the prepaid public transit card according to the information of the unified card face, wherein more than one virtual public transit card associated with the prepaid public transit card may be locally stored.

According to an exemplary embodiment, the device may further include:
a prompting module arranged to, when it is determined that a balance of the prepaid public transit card is smaller than a second preset balance threshold, prompt a user to charge the prepaid public transit card.

According to a third aspect of the embodiments of the present disclosure, there is provided a public transit payment device, which includes:
a first determination module arranged to determine that a balance of a first virtual public transit card associated with a prepaid public transit card is smaller than a first preset balance threshold;
a remittance module arranged to, when it is determined that the balance of the first virtual public transit card associated with the prepaid public transit card is smaller than the first preset balance threshold, perform a remittance to a bank account associated with transportation card management equipment corresponding to the first virtual public transit card on the basis of the prepaid public transit card when a balance of the prepaid public transit card is larger than a second preset balance threshold, wherein the prepaid public transit card may be associated with at least one virtual public transit card; and
a second sending module arranged to send a second charging request to the transportation card management equipment corresponding to the first virtual public transit card, the second charging request including a remittance voucher and an identifier of the first virtual public transit card.

According to an exemplary embodiment, the first determination module may be arranged to: determine that the balance of the first virtual public transit card associated with the prepaid public transit card is smaller than the first preset balance threshold when a first charging request containing the identifier of the first virtual public transit card is received from a terminal; or, acquire a balance of each virtual public transit card according to historical charging data of a user and determine the first virtual public transit card of which the balance is smaller than the first preset balance threshold.

According to an exemplary embodiment, the device may further include:
a third sending module arranged to, when it is determined that the balance of the prepaid public transit card is smaller than the second preset balance threshold, send a charging prompt to the terminal, wherein the charging prompt may be arranged to prompt the user to charge the prepaid public transit card; and
a charging module arranged to, when it is determined that the balance of the prepaid public transit card is smaller than the second preset balance threshold, deduct a preset charging amount from a financial account of the user associated with the prepaid public transit card, and charge the prepaid public transit card by using the preset charging amount.

According to an exemplary embodiment, the device may further include:
a third acquisition module arranged to acquire a latest usage time of each virtual public transit card;
a second determination module arranged to determine, as a second virtual public transit card, a virtual public transit card of which the latest usage time is earlier than a preset time threshold; and
a fourth sending module arranged to send a drawback instruction to transportation card management equipment corresponding to the second virtual public transit card, wherein the drawback instruction may be arranged to cause the transportation card management equipment corresponding to the second virtual public transit card to draw a balance of the second virtual public transit card back to the prepaid public transit card.

According to a fourth aspect of the embodiments of the present disclosure, there is provided a computer-readable storage medium having stored thereon computer instructions executed by a processor to implement the steps of the method of the first aspect.

The storage medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the storage medium can be an integrated circuit in which the program is incorporated, the circuit being adapted to execute the method in question or to be used in its execution.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a diagram of an application scenario of a public transit payment method, according to an exemplary embodiment.
Fig. 2 is a flow chart showing a public transit payment method, according to an exemplary embodiment.
Fig. 3 is a flow chart showing a public transit payment method, according to an exemplary embodiment.
Fig. 4 is a flow chart showing a public transit payment method, according to an exemplary embodiment.
Fig. 5 is a block diagram of a public transit payment device, according to an exemplary embodiment.
Fig. 6 is a block diagram of a public transit payment device, according to an exemplary embodiment.
Fig. 7 is a block diagram of a public transit payment device, according to an exemplary embodiment.
Fig. 8 is a block diagram of a public transit payment device, according to an exemplary embodiment.
Fig. 9 is a block diagram of a public transit payment device, according to an exemplary embodiment.
Fig. 10 is a block diagram of a public transit payment device, according to an exemplary embodiment.
Fig. 11 is a block diagram of a public transit payment device, according to an exemplary embodiment.
Fig. 12 is a block diagram of a public transit payment device, according to an exemplary embodiment.
Fig. 13 is a block diagram of a public transit payment device, according to an exemplary embodiment.
Fig. 14 is a block diagram of a public transit payment device, according to an exemplary embodiment.
Fig. 15 is a block diagram of a public transit payment device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In existing technology, terminals, such as mobile phones, usually access public transit card companies by: connecting transportation card management equipment of each city one by one and displaying public transit service of these cities to users through wallet clients in a centralized manner. A user sees public transit card entries of multiple cities on a mobile phone. The user selects his/her own required city for public transit card issuing and charging, and installs a public transit card of this city in the mobile phone of the user, and then the user may use municipal public transit service. In this way, every time when arriving at a new city, the user is required to install a local public transit card, and can start use after charging the public transit card. In the known technology, a public transit service capability of each city is transferred from offline to online for the user to access through the mobile phone; and parts are gathered into a whole, and dispersion is turned into centralization, so that the user may activated public transit service of multiple cities through a mobile phone client. However, the known technology only simply and ponderously replicates a conventional offline public transit payment mode, the user may use the public transit service of each city only by manually charging each virtual public transit card, thus an operating process is complex and tedious, and user experience is poorer.

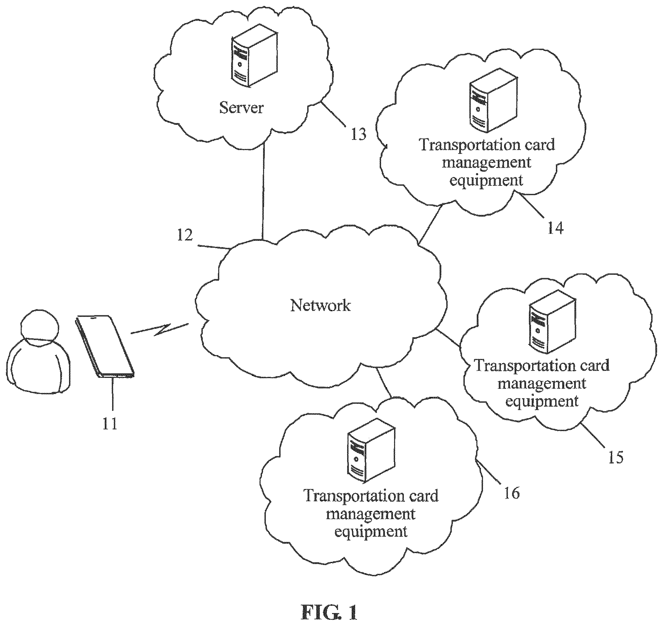

Referring to Fig. 1, an optional application scenario of a public transit payment method in an embodiment of the present disclosure is shown. The application scenario shown in Fig. 1 includes: a terminal 11, a network 12, a server 13, transportation card management equipment 14, transportation card management equipment 15 and transportation card management equipment 16, and the terminal 11, the server 13, the transportation card management equipment 14, the transportation card management equipment 15 and the transportation card management equipment 16 perform communication and data interaction through the network 12; the network 12 is a wired or wireless network; and the transportation card management equipment 14, the transportation card management equipment 15 and the transportation card management equipment 16 are transportation card management equipment corresponding to three different cities respectively. In the related technology, the server 14 of a public transit payment service performs public transit payment service connection with the transportation card management equipment of each city one by one, the background server 13 displays public transit service of each city to a user in a centralized manner through the terminal 11 or a terminal application (such as a wallet client), a virtual public transit card entry of each city is displayed on a user interface of the terminal 11, every time when arriving at a new city, the user is required to manually select the virtual public transit card entry of this city for a card issuing and charging process of the virtual public transit card, the terminal acquires the virtual public transit card of the city, and then the user may use municipal public transit service in the city. Obviously, when the related technology is adopted, the user may use the public transit service of each city only by manually charging each virtual public transit card, the operating process is complex and tedious, and the user experience is poorer.

It is important to note that the application scenario shown in Fig. 1 is only a possible application scenario example of the technical solution provided by the embodiment of the present disclosure, Fig. 1 also exemplarily includes the transportation card management equipment of three cities, and another application scenario may include equipment not involved in Fig. 1 and transportation card management equipment of any number of cities.

The technical solution recorded in the embodiment of the present disclosure may be applied to the above scenario to help to solve the problems of complex and tedious operating process and poor user experience in the related technology.

In order to solve the problem, an embodiment of the present disclosure provides a public transit payment method, which includes that: when it is detected that a balance of a first virtual public transit card associated with a prepaid public transit card is smaller than a first preset balance threshold, a first charging request containing an identifier of the first virtual public transit card is sent to a server, wherein the prepaid public transit card is associated with at least one virtual public transit card; a charging response for the first virtual public transit card is received; and a public transit payment operation is performed by using the first virtual public transit card.

In the technical solution provided by the embodiment of the present disclosure, when it is detected that the balance of the first virtual public transit card associated with the prepaid public transit card is insufficient, the charging request is automatically sent to the server, the public transit payment operation may be performed by using the first virtual public transit card to automatically initiate a virtual public transit card charging process after the charging response is received, a user is not required to maintain a charging matter of each virtual public transit card, a manual charging operating process of the user is eliminated, and a user experience is improved.

It is important to point out that the terminal in the embodiment of the present disclosure may be user equipment such as an intelligent mobile phone, a tablet computer, a desktop computer, a notebook computer and wearable equipment.

On the basis of the application scenario recorded above, each of the following specific embodiments is provided.

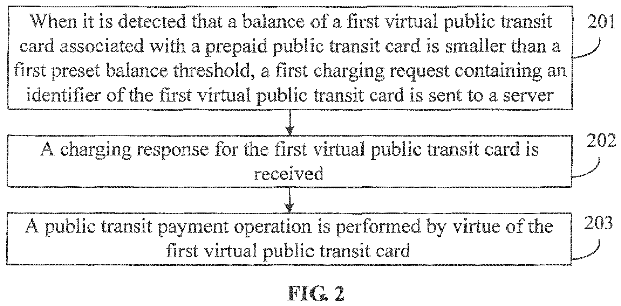

Fig. 2 is a flow chart showing a public transit payment method, according to an exemplary embodiment. An execution main body of the method may be a terminal, and as shown in Fig. 2, the method includes the following steps 201-203.

In Step 201, when it is detected that a balance of a first virtual public transit card associated with a prepaid public transit card is smaller than a first preset balance threshold, a first charging request containing an identifier of the first virtual public transit card is sent to a server, wherein the prepaid public transit card is associated with at least one virtual public transit card.

In Step 202, a charging response for the first virtual public transit card is received.

In Step 203, a public transit payment operation is performed by using the first virtual public transit card.

Exemplarily, the prepaid public transit card is associated with at least one virtual public transit card, and the prepaid public transit card is arranged to charge each virtual public transit card. The first preset balance threshold includes: a maximum single public transit consumption value of a target city or a double of the maximum single public transit consumption value of the target city. The first preset balance threshold may be a threshold set by a user/terminal/server and corresponding to a target virtual public transit card, and may also be a threshold set by the user/terminal/server and applied to all virtual public transit cards. Optionally, a time when the terminal detects whether a balance of the virtual public transit card associated with the prepaid public transit card is smaller than the first preset balance threshold or not may include, without limitation, any one of the following conditions: 1) when determining that the user is about to use public transit service of a target city, the terminal determines the first virtual public transit card corresponding to the target city, and detects whether the balance of the first virtual public transit card is smaller than the first preset balance threshold or not; 2) the terminal acquires current position information of the terminal when monitoring a selection operation over the prepaid public transit card, and the terminal determines a target virtual public transit card matched with the current position information of the terminal, and detects whether a balance of the target virtual public transit card is smaller than the first preset balance threshold or not; and 3) the terminal acquires a destination or stopover after acquiring a travel itinerary of the user, determines a target virtual public transit card corresponding to the destination or stopover, and detects a balance of the target virtual public transit card is smaller than the first preset balance threshold or not.

In one example, the prepaid public transit card is pre-activated for the user, and the prepaid public transit card is charged. For example, the terminal sends an account opening application to the server, wherein the account opening application is arranged to request the server to activate the prepaid public transit card for the terminal; the server sends an account opening response to the terminal, the account opening response including an identifier of the prepaid public transit card activated by the server for the terminal; and the terminal receives the account opening response returned by the server, and parses the account opening response to obtain the prepaid public transit card. The terminal acquires and stores more than one virtual public transit card, and associates the prepaid public transit card with the virtual public transit card, and the prepaid public transit card may charge all the virtual public transit cards associated with the prepaid public transit card. During a practical application, an implementation manner for the terminal to acquire and store the more than one virtual public transit card may at least include any one or combination of the following manners.

A first manner: the terminal acquires address information of the user, the address information being associated with historical activities or schedule of the user; and the terminal acquires and stores a virtual public transit card associated with the address information on the basis of the address information. For example, the terminal sends a request of acquiring the virtual public transit card to transportation card management equipment corresponding to the address information, the request at least including identification information of the terminal; the transportation card management equipment returns information of the virtual public transit card to the terminal after receiving the request; and the terminal installs the virtual public transit card according to the information of the virtual public transit card.

A second manner: after issuing the prepaid public transit card to the user, the server applies the transportation card management equipment for activation of a virtual public transit card for the user; and the server may only activate a virtual public transit card of a city the user is about to go to or a city the user frequently goes to for the user, and may also activate virtual public transit cards of all cities supported by or connected with the server. For example, the server applies the transportation card management equipment of each city for activation of the virtual public transit card of each city for the user; each piece of transportation card management equipment sends a virtual public transit card activation message to the terminal; and the terminal receives the virtual public transit card activation message sent by the server, the virtual public transit card activation message including an identifier of at least one virtual public transit card applied by the server from the transportation card management equipment to be activated for the prepaid public transit card.

In one example, the terminal is required to determine the virtual public transit card to be used before the public transit payment operation, in one of the following manners: a): the terminal may acquire a current position and autonomously activate the first virtual public transit card associated with the current position; or b): the terminal may pre-judge a place the user is probably about to go according to the historical activities or schedule of the user and acquire the first virtual public transit card corresponding to the place; or c): the user may manually select the first virtual public transit card to be used from multiple virtual public transit cards associated with the prepaid public transit card on the terminal.

As an example, all the virtual public transit cards associated with the prepaid public transit card are displayed on a display interface of the terminal, and the user manually selects the first virtual public transit card to be used from the multiple virtual public transit cards associated with the prepaid public transit card; or, the prepaid public transit card may also be displayed on the display interface of the terminal according to preconfigured information of a unified card face, and the more than one virtual public transit card associated with the prepaid public transit card is locally stored, wherein the terminal acquires the preconfigured information of the unified card face, the unified card face refers to a pattern, symbol or the like arranged to be displayed as a card face of the virtual public transit card, information of the unified card face is preconfigured and stored in a database, only the prepaid public transit card is displayed on a user interface of the terminal, the virtual public transit cards associated with the prepaid public transit card are not directly displayed on the user interface, the user may not see these virtual public transit cards, and the user only sees the prepaid public transit card. For example, before the user passes through a gate of a public transit service, the prepaid public transit card is called up, the terminal makes a judgment through a geographical position of the user, and automatically selects the virtual public transit card corresponding to a current city, at this moment, the prepaid public transit card is mapped onto the practical virtual public transit card, and then the user may perform public transit payment by using the prepaid public transit card and enjoy virtual public transit card-based consumption service.

In an example, for ensuring that the user may smoothly perform public transit payment by using the prepaid public transit card, the terminal may detect the balance of the first virtual public transit card to be used, and when detecting that the balance of the first virtual public transit card is smaller than the first preset balance threshold, the terminal sends the first charging request containing the identifier of the first virtual public transit card to the server; when the server determines that the balance of the first virtual public transit card associated with the prepaid public transit card is smaller than a first preset balance threshold, a remittance to a bank account associated with transportation card management equipment corresponding to the first virtual public transit card is performed on the basis of the prepaid public transit card when a balance of the prepaid public transit card is larger than a second preset balance threshold, wherein the prepaid public transit card is associated with at least one virtual public transit card; the server sends a second charging request to the transportation card management equipment corresponding to the first virtual public transit card, the second charging request including a remittance voucher and the identifier of the first virtual public transit card; and the transportation card management equipment sends a charging response to the terminal after receiving the second charging request. As an example, the server may also acquire a balance of each virtual public transit card according to historical charging data of the user, and determines the first virtual public transit card of which the balance is smaller than the first preset balance threshold.

In an example, when the balance of the first virtual public transit card is larger than the first preset balance threshold, for example, the balance of the first virtual public transit card is larger than the maximum single public transit consumption value of the target city, public transit payment of a single travel of the user may be ensured to be smoothly implement. In another example, when the balance of the first virtual public transit card is larger than the double of the maximum single public transit consumption value of the target city, smooth roundtripping of the user may be ensured.

In the technical solution provided by the embodiment of the present disclosure, when it is detected that the balance of the first virtual public transit card associated with the prepaid public transit card is insufficient, the charging request is automatically sent to the server, the public transit payment operation may be performed by using the first virtual public transit card to automatically initiate a virtual public transit card charging process after the charging response is received, the user is not required to maintain a charging matter of each virtual public transit card, and a manual charging operating process of the user is eliminated, so that user experience is improved.

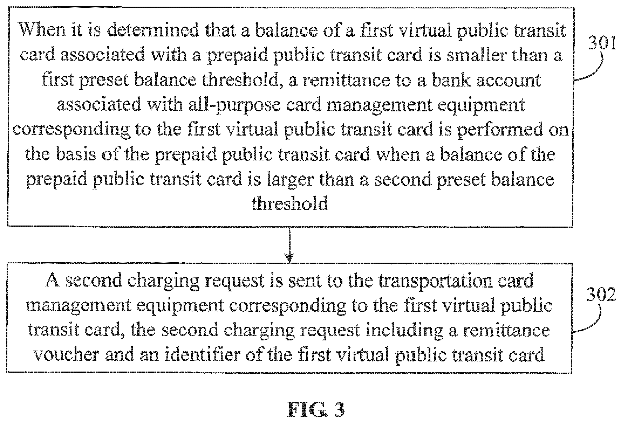

Fig. 3 is a flow chart showing a public transit payment method, according to an exemplary embodiment. An execution main body of the method may be a server. As shown in Fig. 3, the method includes the following Steps 301-302.

In Step 301, when it is determined that a balance of a first virtual public transit card associated with a prepaid public transit card is smaller than a first preset balance threshold, a remittance to a bank account associated with transportation card management equipment corresponding to the first virtual public transit card is performed on the basis of the prepaid public transit card when a balance of the prepaid public transit card is larger than a second preset balance threshold, wherein the prepaid public transit card is associated with at least one virtual public transit card.

In an example, the server may determine that the balance of the first virtual public transit card associated with the prepaid public transit card is smaller than the first preset balance threshold in any one of the following manners: 1) when a first charging request containing an identifier of the first virtual public transit card is received from a terminal, it is determined that the balance of the first virtual public transit card associated with the prepaid public transit card is smaller than the first preset balance threshold; and 2) the server acquires a balance of each virtual public transit card according to historical charging data of a user, and determines the first virtual public transit card of which the balance is smaller than the first preset balance threshold.

In Step 302, a second charging request is sent to the transportation card management equipment corresponding to the first virtual public transit card, the second charging request including a remittance voucher and an identifier of the first virtual public transit card.

In an example, the server acquires a latest usage time of each virtual public transit card; a virtual public transit card of which the latest usage time is earlier than a preset time threshold is determined as a second virtual public transit card; and a drawback instruction is sent to transportation card management equipment corresponding to the second virtual public transit card, wherein the drawback instruction is arranged to cause the transportation card management equipment corresponding to the second virtual public transit card to draw a balance of the second virtual public transit card back to the prepaid public transit card. A balance of an idle virtual public transit card is cleared, and the balance is drawn back to the prepaid public transit card of the user, so that idle and waste funds of the user are prevented.

In an example, the above operations of determining the idle virtual public transit card, sending the drawback instruction to the transportation card management equipment corresponding to the idle virtual public transit card and the like may also be executed by the terminal.

In the technical solution provided by the embodiment of the present disclosure, when the server determines that the balance of the first virtual public transit card associated with the prepaid public transit card is smaller than the first preset balance threshold, when it is determined that the balance of the prepaid public transit card is larger than the second preset balance threshold, a remittance to the bank account associated to the transportation card management equipment corresponding to the first virtual public transit card is performed on the basis of the prepaid public transit card, the transportation card management equipment is indicated to charge the first virtual public transit card to implement automatic charging, the user is not required to maintain a charging matter of each virtual public transit card, a manual charging operating process of the user is eliminated, and a user experience may be improved.

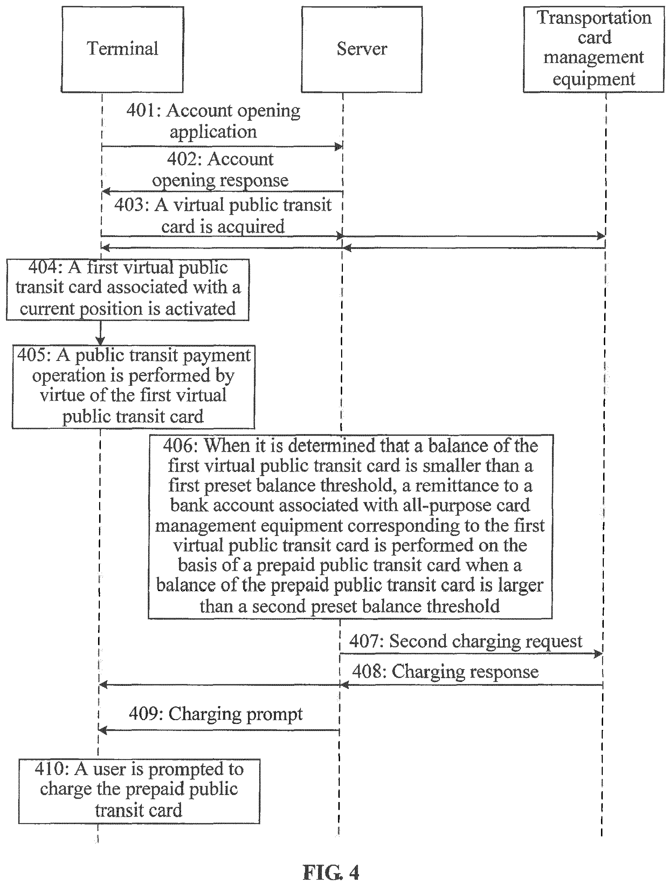

Fig. 4 is a flow chart showing a public transit payment method, according to an exemplary embodiment. The method is implemented by cooperation of a terminal, a server and transportation card management equipment, and different virtual public transit cards may correspond to different transportation card management equipment. One piece of transportation card management equipment is exemplarily displayed in Fig. 4. One or more than one piece of transportation card management equipment may practically be included. As shown in Fig. 4, the public transit payment method involved in the present disclosure includes the following steps.

In Step 401, the terminal sends an account opening application to the server, wherein the account opening application is arranged to request the server to activate a prepaid public transit card for the terminal.

In Step 402, the server sends an account opening response to the terminal, the account opening response including an identifier of the prepaid public transit card activated by the server for the terminal, and the terminal receives the account opening response returned by the server, parses the account opening response to obtain the prepaid public transit card, and charges the prepaid public transit card.

In Step 403, the terminal acquires and stores at least one or more virtual public transit cards, and associates the prepaid public transit card with the virtual public transit cards, wherein the prepaid public transit card may charge all the virtual public transit cards associated with the prepaid public transit card. During a practical application, the terminal can acquire and store the more than one virtual public transit card in any one or combination of the following manners:
1: the terminal acquires address information of a user, the address information being associated with historical activities or schedule of the user; and the terminal acquires and stores a virtual public transit card associated with the address information on the basis of the address information. For example, the terminal sends a request of acquiring the virtual public transit card to transportation card management equipment corresponding to the address information, the request at least including identification information of the terminal; the transportation card management equipment returns information of the virtual public transit card to the terminal after receiving the request; and the terminal installs the virtual public transit card according to the information of the virtual public transit card;
2: the terminal acquires a virtual public transit card indicated by the user;
3: after issuing the prepaid public transit card to the user, the server applies the transportation card management equipment for activation of a virtual public transit card for the user; and the server may only activate a virtual public transit card of a city the user is about to go to or a city the user frequently goes to for the user, and may also activate virtual public transit cards of all cities supported by or connected with the server. For example, the server applies the transportation card management equipment of each city for activation of the virtual public transit card of each city for the user; each piece of transportation card management equipment sends a virtual public transit card activation message to the terminal; and the terminal receives the virtual public transit card activation message sent by the server, the virtual public transit card activation message including an identifier of at least one virtual public transit card applied by the server from the transportation card management equipment to be activated for the prepaid public transit card.

In Step 404, the terminal activates the first virtual public transit card associated with a current position.

In Step 405, the terminal performs a public transit payment operation by using the first virtual public transit card.

In Step 406, when the server determines that a balance of the first virtual public transit card associated with the prepaid public transit card is smaller than a first preset balance threshold, a remittance to a bank account associated with transportation card management equipment corresponding to the first virtual public transit card is performed on the basis of the prepaid public transit card when a balance of the prepaid public transit card is larger than a second preset balance threshold, wherein the prepaid public transit card is associated with at least one virtual public transit card.

In an example, an implementation manner for the server to determine that the balance of the first virtual public transit card associated with the prepaid public transit card is smaller than the first preset balance threshold may be, for example, as follows: when the terminal detects that the balance of the first virtual public transit card associated with the prepaid public transit card is smaller than a first preset balance threshold, a first charging request containing an identifier of the first virtual public transit card is sent to the server; and when receiving the first charging request containing the identifier of the first virtual public transit card from the terminal, the server determines that the balance of the first virtual public transit card associated with the prepaid public transit card is smaller than the first preset balance threshold. The server may also acquire a balance of each virtual public transit card according to historical charging data of the user and determine the first virtual public transit card of which the balance is smaller than the first preset balance threshold. Practically, with adoption of the solution of the present disclosure, the user is not required to actively pay attention to whether the balance of each virtual public transit card is sufficient or not, and the terminal may automatically charge each virtual public transit card associated with the prepaid public transit card by using the prepaid public transit card, so that influence on normal use of the user is avoided.

In Step 407, the server sends a second charging request to the transportation card management equipment corresponding to the first virtual public transit card, the second charging request including a remittance voucher and an identifier of the first virtual public transit card.

In Step 408, the transportation card management equipment receives the second charging request sent by the server, and when the identifier of the first virtual public transit card and the remittance voucher are acquired, sends a charging response containing the identifier of the first virtual public transit card to the terminal, and the terminal receives the charging response sent by the transportation card management equipment through the server and containing the identifier of the first virtual public transit card, i.e. the charging response for the first virtual public transit card.

In Step 409, when determining that the balance of the prepaid public transit card is smaller than the second preset balance threshold, the server sends a charging prompt to the terminal, wherein the charging prompt is arranged to prompt the user to charge the prepaid public transit card.

In an example, if the user has signed a password-free payment protocol with a bank in advance, the server may automatically initiate withholding of a specified amount and charge the public transit card to be used, that is, a preset charging amount is deducted from a financial account of the user associated with the prepaid public transit card, and the prepaid public transit card is charged by using the preset charging amount.

In Step 410, the terminal receives the charging prompt sent by the server, determines that the balance of the prepaid public transit card is smaller than a second preset balance threshold, and prompts the user to charge the prepaid public transit card.

According to the technical solution provided by the embodiment of the present disclosure, the flow of the public transit payment method implemented by cooperation of the terminal, the server and the transportation card management equipment is described, processes of account opening of the prepaid public transit card, charging of the virtual public transit card, prepaid public transit card-based payment and the like are involved, a virtual public transit card charging process is automatically initiated, the user is not required to maintain a charging matter of each virtual public transit card, and a manual charging operating process of the user is eliminated, so that user experience may be improved.

The below is the device embodiment of the present disclosure, which may be arranged to execute the method embodiments of the present disclosure.

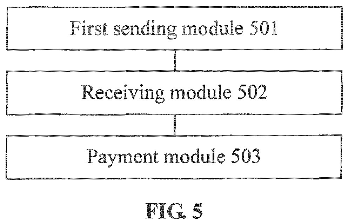

Fig. 5 is a block diagram of a public transit payment device, according to an exemplary embodiment. The device may be implemented in various manners. For example, all components of the device are implemented in a terminal, or, the components in the device are implemented on a terminal side in a coupling manner. The device may implement the method involved in the present disclosure through software, hardware or a combination of the two. As shown in Fig. 5, the public transit payment device includes: a first sending module 501, a receiving module 502 and a payment module 503, wherein
the first sending module 501 is arranged to, when it is detected that a balance of a first virtual public transit card associated with a prepaid public transit card is smaller than a first preset balance threshold, send a first charging request containing an identifier of the first virtual public transit card to a server, wherein the prepaid public transit card is associated with at least one virtual public transit card;
the receiving module 502 is arranged to receive a charging response for the first virtual public transit card; and
the payment module 503 is arranged to perform a public transit payment operation by using the first virtual public transit card.

The device provided by the embodiment of the present disclosure may be arranged to execute the technical solution of the embodiment shown in Fig. 2, and a execution manner and beneficial effects thereof are similar, and will not be elaborated herein.

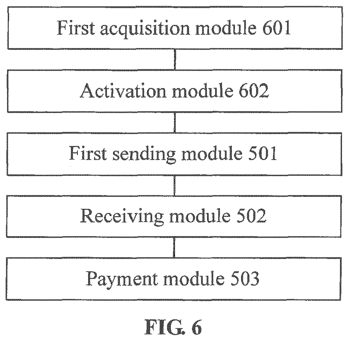

In a possible implementation mode, as shown in Fig. 6, the public transit payment device shown in Fig. 5 may further include: a first acquisition module 601 and an activation module 602, wherein
the first acquisition module 601 is arranged to acquire a current position; and
the activation module 602 is arranged to activate the first virtual public transit card, the first virtual public transit card being associated with the current position.

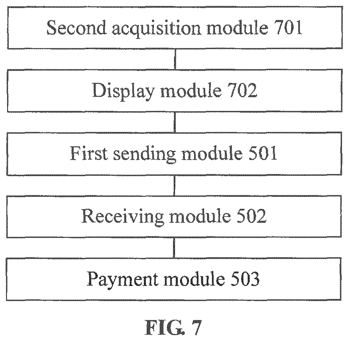

In a possible implementation mode, as shown in Fig. 7, the public transit payment device shown in Fig. 5 may further include: a second acquisition module 701 and a display module 702, wherein
the second acquisition module 701 is arranged to acquire preconfigured information of a unified card face; and
the display module 702 is arranged to display the prepaid public transit card according to the information of the unified card face, wherein more than one virtual public transit card associated with the prepaid public transit card is locally stored.

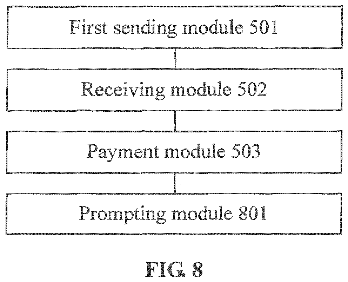

In a possible implementation mode, as shown in Fig. 8, the public transit payment device shown in Fig. 5 may further include: a prompting module 801 arranged to, when it is determined that a balance of the prepaid public transit card is smaller than a second preset balance threshold, prompt a user to charge the prepaid public transit card.

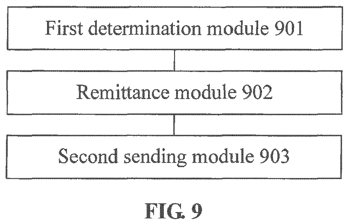

Fig. 9 is a block diagram of a public transit payment device, according to an exemplary embodiment. The device may be implemented in various manners. For example, all components of the device are implemented in a terminal, or, the components in the device are implemented on a terminal side in a coupling manner. The device may implement the method involved in the present disclosure through software, hardware or a combination of the two. As shown in Fig. 9, the public transit payment device includes: a first determination module 901, a remittance module 902 and a second sending module 903, wherein
the first determination module 901 is arranged to determine that a balance of a first virtual public transit card associated with a prepaid public transit card is smaller than a first preset balance threshold;
the remittance module 902 is arranged to, when it is determined that the balance of the first virtual public transit card associated with the prepaid public transit card is smaller than the first preset balance threshold, perform a remittance to a bank account associated with transportation card management equipment corresponding to the first virtual public transit card on the basis of the prepaid public transit card when a balance of the prepaid public transit card is larger than a second preset balance threshold, wherein the prepaid public transit card is associated with at least one virtual public transit card; and
the second sending module 903 is arranged to send a second charging request to the transportation card management equipment corresponding to the first virtual public transit card, the second charging request including a remittance voucher and an identifier of the first virtual public transit card.

In a possible implementation mode, the first determination module 901:
determines that the balance of the first virtual public transit card associated with the prepaid public transit card is smaller than the first preset balance threshold when a first charging request containing the identifier of the first virtual public transit card is received from a terminal;
   or,
acquires a balance of each virtual public transit card according to historical charging data of a user and determines the first virtual public transit card of which the balance is smaller than the first preset balance threshold.

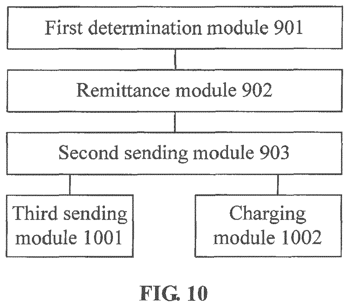

In a possible implementation mode, as shown in Fig. 10, the public transit payment device shown in Fig. 9 may further include:
a third sending module 1001 arranged to, when it is determined that the balance of the prepaid public transit card is smaller than the second preset balance threshold, send a charging prompt to the terminal, wherein the charging prompt is arranged to prompt the user to charge the prepaid public transit card; and
a charging module 1002 arranged to, when it is determined that the balance of the prepaid public transit card is smaller than the second preset balance threshold, deduct a preset charging amount from a financial account of the user associated with the prepaid public transit card, and charge the prepaid public transit card by using the preset charging amount.

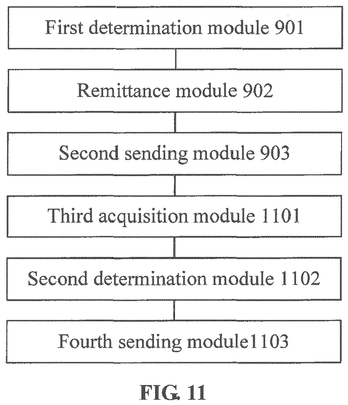

In a possible implementation mode, as shown in Fig. 11, the public transit payment device shown in Fig. 9 may further include: a third acquisition module 1101, a second determination module 1102 and a fourth sending module 1103, wherein
the third acquisition module 1101 is arranged to acquire a latest usage time of each virtual public transit card;
the second determination module 1102 is arranged to determine, as a second virtual public transit card, a virtual public transit card of which the latest usage time is earlier than a preset time threshold; and
the fourth sending module 1103 is arranged to send a drawback instruction to transportation card management equipment corresponding to the second virtual public transit card, wherein the drawback instruction is arranged to cause the transportation card management equipment corresponding to the second virtual public transit card to draw a balance of the second virtual public transit card back to the prepaid public transit card.

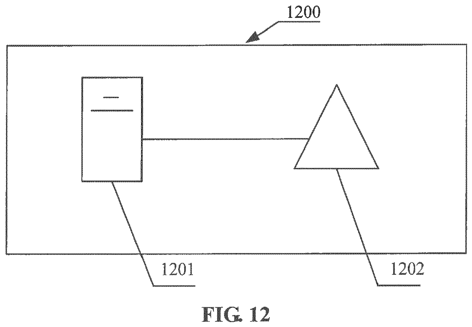

Fig. 12 is a block diagram of a public transit payment device 1200, according to an exemplary embodiment. The public transit payment device 1200 may be implemented in various manners. For example, all components of the device are implemented in a terminal, or, the components in the device are implemented on a terminal side in a coupling manner. The public transit payment device 1200 includes:
a processor 1201; and
a memory 1202 arranged to store instructions executable by the processor,
wherein the processor 1201 is arranged to:
   when it is detected that a balance of a first virtual public transit card associated with a prepaid public transit card is smaller than a first preset balance threshold, send a first charging request containing an identifier of the first virtual public transit card to a server, wherein the prepaid public transit card is associated with at least one virtual public transit card;
   receive a charging response for the first virtual public transit card; and
   perform a public transit payment operation by using the first virtual public transit card.

In an embodiment, the first preset balance threshold includes: a maximum single public transit consumption value of a target city or a double of the maximum single public transit consumption value of the target city.

In an embodiment, the processor 1201 may further be arranged to:
acquire a current position; and
activate the first virtual public transit card, the first virtual public transit card being associated with the current position.

In an embodiment, the processor 1201 may further be arranged to:
acquire preconfigured information of a unified card face; and
display the prepaid public transit card according to the information of the unified card face, wherein more than one virtual public transit card associated with the prepaid public transit card is locally stored.

In an embodiment, the processor 1201 may further be arranged to:
when it is determined that a balance of the prepaid public transit card is smaller than a second preset balance threshold, prompt a user to charge the prepaid public transit card.

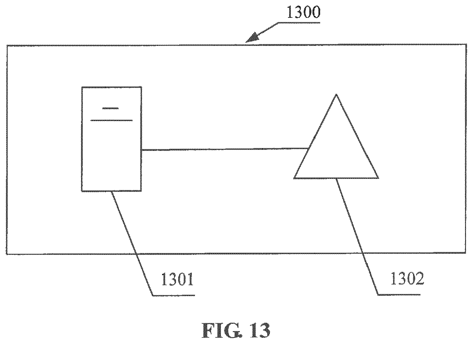

Fig. 13 is a block diagram of a public transit payment device 1300, according to an exemplary embodiment. The public transit payment device 1200 may be implemented in various manners. For example, all components of the device are implemented in a terminal, or, the components in the device are implemented on a terminal side in a coupling manner. The public transit payment device 1200 includes:
a processor 1301; and
a memory 1302 arranged to store instructions executable by the processor,
wherein the processor 1301 is arranged to:
   when it is determined that a balance of a first virtual public transit card associated with a prepaid public transit card is smaller than a first preset balance threshold, perform a remittance to a bank account associated with transportation card management equipment corresponding to the first virtual public transit card on the basis of the prepaid public transit card when a balance of the prepaid public transit card is larger than a second preset balance threshold, wherein the prepaid public transit card is associated with at least one virtual public transit card; and
   send a second charging request to the transportation card management equipment corresponding to the first virtual public transit card, the second charging request including a remittance voucher and an identifier of the first virtual public transit card.

In an embodiment, the processor 1301 may further be arranged to:
when a first charging request containing the identifier of the first virtual public transit card is received from a terminal, determine that the balance of the first virtual public transit card associated with the prepaid public transit card is smaller than the first preset balance threshold;
   or,
acquire a balance of each virtual public transit card according to historical charging data of a user, and determine the first virtual public transit card of which the balance is smaller than the first preset balance threshold.

In an embodiment, the processor 1301 may further be arranged to:
when it is determined that the balance of the prepaid public transit card is smaller than the second preset balance threshold, send a charging prompt to the terminal, wherein the charging prompt is arranged to prompt the user to charge the prepaid public transit card; or,
when it is determined that the balance of the prepaid public transit card is smaller than the second preset balance threshold, deduct a preset charging amount from a financial account of the user associated with the prepaid public transit card, and charge the prepaid public transit card by using the preset charging amount.

In an embodiment, the processor 1301 may further be arranged to:
acquire a latest usage time of each virtual public transit card;
determine, as a second virtual public transit card, a virtual public transit card of which the latest usage time is earlier than a preset time threshold; and
send a drawback instruction to transportation card management equipment corresponding to the second virtual public transit card, wherein the drawback instruction is arranged to cause the transportation card management equipment corresponding to the second virtual public transit card to draw a balance of the second virtual public transit card back to the prepaid public transit card.

With respect to the devices in the above embodiments, the specific manners for performing operations for individual modules therein have been described in detail in the embodiments regarding the methods, which will not be elaborated herein.

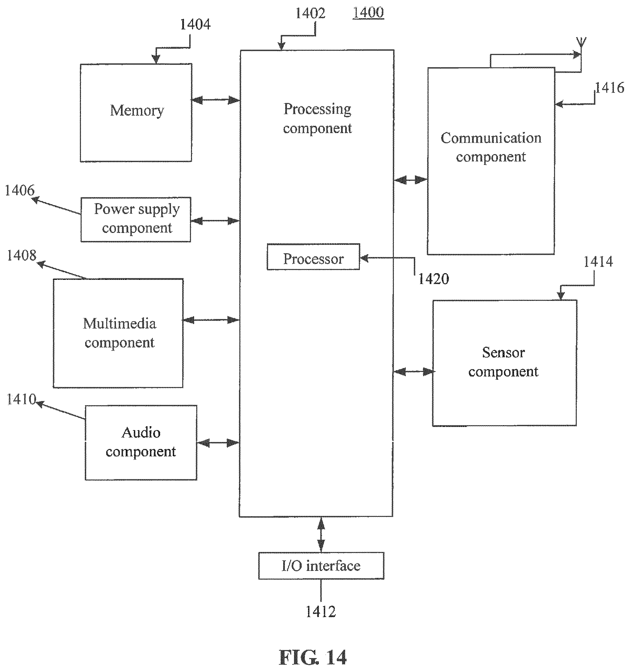

Fig. 14 is a block diagram of a public transit payment device, according to an exemplary embodiment. For example, the public transit payment device 1400 may be equipment such as an intelligent mobile terminal, a tablet computer and wearable equipment.

Referring to Fig. 14, the public transit payment device 1400 may include one or more of the following components: a processing component 1402, a memory 1404, a power supply component 1406, a multimedia component 1408, an audio component 1410, an Input/Output (I/O) interface 1412, a sensor component 1414, and a communication component 1416.

The processing component 1402 typically controls overall operations of the public transit payment device 1400, such as the operations associated with display, telephone calls, data communications, camera operations, and recording operations. The processing component 1402 may include one or more processors 1420 to execute instructions to perform all or part of the steps in the abovementioned method. Moreover, the processing component 1402 may include one or more modules which facilitate interaction between the processing component 1402 and the other components. For instance, the processing component 1402 may include a multimedia module to facilitate interaction between the multimedia component 1408 and the processing component 1402.

The memory 1404 is arranged to store various types of data to support the operation of the public transit payment device 1400. Examples of such data include instructions for any application programs or methods operated on the public transit payment device 1400, contact data, phonebook data, messages, pictures, video, etc. The memory 1404 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power supply component 1406 provides power for various components of the public transit payment device 1400. The power supply component 1406 may include a power management system, one or more power supplies, and other components associated with the generation, management and distribution of power for the public transit payment device 1400.

The multimedia component 1408 includes a screen providing an output interface between the public transit payment device 1400 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some embodiments, the multimedia component 1408 includes a front camera and/or a rear camera. The front camera and/or the rear camera may receive external multimedia data when the public transit payment device 1400 is in an operation mode, such as a photographing mode or a video mode. Each of the front camera and the rear camera may be a fixed optical lens system or have focusing and optical zooming capabilities.

The audio component 1410 is arranged to output and/or input an audio signal. For example, the audio component 1410 includes a Microphone (MIC), and the MIC is arranged to receive an external audio signal when the public transit payment device 1400 is in the operation mode, such as a call mode, a recording mode and a voice recognition mode. The received audio signal may be further stored in the memory 1404 or sent through the communication component 1416. In some embodiments, the audio component 1410 further includes a speaker arranged to output the audio signal.

The I/O interface 1412 provides an interface between the processing component 1402 and a peripheral interface module, and the peripheral interface module may be a keyboard, a click wheel, a button and the like. The button may include, without limitation: a home button, a volume button, a starting button and a locking button.

The sensor component 1414 includes one or more sensors arranged to provide status assessment in various aspects for the public transit payment device 1400. For instance, the sensor component 1414 may detect an on/off status of the public transit payment device 1400 and relative positioning of components, such as a display and small keyboard of the public transit payment device 1400, and the sensor component 1414 may further detect a change in a position of the public transit payment device 1400 or a component of the public transit payment device 1400, presence or absence of contact between the user and the public transit payment device 1400, orientation or acceleration/deceleration of the public transit payment device 1400 and a change in temperature of the public transit payment device 1400. The sensor component 1414 may include a proximity sensor arranged to detect presence of an object nearby without any physical contact. The sensor component 1414 may also include a light sensor, such as a Complementary Metal Oxide Semiconductor (CMOS) or Charge Coupled Device (CCD) image sensor, arranged for use in an imaging application. In some embodiments, the sensor component 1414 may also include an acceleration sensor, a gyroscope sensor, a magnetic sensor, a pressure sensor or a temperature sensor.

The communication component 1416 is arranged to facilitate wired or wireless communication between the public transit payment device 1400 and other equpment. The public transit payment device 1400 may access a communication-standard-based wireless network, such as a Wireless Fidelity (WiFi) network, a 2nd-Generation (2G) or 3rd-Generation (3G) network or a combination thereof. In an exemplary embodiment, the communication component 1416 receives a broadcast signal or broadcast associated information from an external broadcast management system through a broadcast channel. In an exemplary embodiment, the communication component 1416 further includes an NFC module to facilitate short-range communication. For example, the NFC module may be implemented on the basis of a Radio Frequency Identification (RFID) technology, an Infrared Data Association (IrDA) technology, an Ultra-WideBand (UWB) technology, a Bluetooth (BT) technology and another technology.

In an exemplary embodiment, the public transit payment device 1400 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is arranged to execute the abovementioned method.

In an exemplary embodiment, there is also provided a non-transitory computer-readable storage medium including an instruction, such as the memory 1404 including an instruction, and the instruction may be executed by the processor 1420 of the public transit payment device 1400 to implement the abovementioned method. For example, the non-transitory computer-readable storage medium may be a ROM, a Random Access Memory (RAM), a Compact Disc Read-Only Memory (CD-ROM), a magnetic tape, a floppy disc, optical data storage equipment and the like.

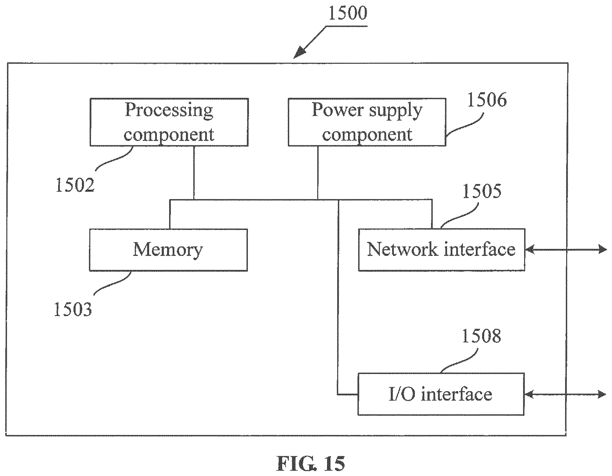

Fig. 15 is a block diagram of a public transit payment device, according to an exemplary embodiment. For example, the public transit payment device 1500 may be provided as a server. The public transit payment device 1500 includes a processing component 1502, further including one or more processors, and a memory resource represented by a memory 1503 arranged to store instructions executable by the processing component 1502, such as application programs. The application programs stored in the memory 1503 may include one or more than one module of which each corresponds to a set of instructions. In addition, the processing component 1502 is arranged to execute the instructions, so as to execute the abovementioned method.

The public transit payment device 1500 may further include a power supply component 1506 arranged to execute power mangement of the public transit payment device 1500, a wired or wireless network interface 1505 arranged to connect the public transit payment device 1500 to a network, and an I/O interface 1508. The public transit payment device 1500 may be operated on the basis of an operating system stored in the memory 1503, such as Windows ServerTM, Mac OS XTM, UnixTM, LinuxTM or FreeBSDTM.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present invention being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A public transit payment method, applied to a terminal (11), **characterized in that** the method comprises:
when it is detected that a balance of a first virtual public transit card associated with a prepaid public transit card is smaller than a first preset balance threshold, sending a first charging request containing an identifier of the first virtual public transit card to a server (13), wherein the prepaid public transit card is associated with at least one virtual public transit card (201);
receiving a charging response for the first virtual public transit card (202); and
performing a public transit payment operation by using the first virtual public transit card (203).

2. The method of claim 1, further comprising:
acquiring a current position; and
activating the first virtual public transit card, the first virtual public transit card being associated with the current position.

3. The method of claim 1 or 2, further comprising:
acquiring preconfigured information of a unified card face; and
displaying the prepaid public transit card according to the information of the unified card face, wherein more than one virtual public transit card associated with the prepaid public transit card is locally stored.

4. The method of claim 1, 2 or 3, wherein the first preset balance threshold comprises: a maximum single public transit consumption value of a target city or a double of the maximum single public transit consumption value of the target city.

5. The method of any preceding claim, further comprising:
when it is determined that a balance of the prepaid public transit card is smaller than a second preset balance threshold, prompting a user to charge the prepaid public transit card.

6. A public transit payment device, **characterized in that** the device comprises:
a first sending module (501) arranged to, when it is detected that a balance of a first virtual public transit card associated with a prepaid public transit card is smaller than a first preset balance threshold, send a first charging request containing an identifier of the first virtual public transit card to a server, wherein the prepaid public transit card is associated with at least one virtual public transit card;
a receiving module (502) arranged to receive a charging response for the first virtual public transit card; and
a payment module (503) arranged to perform a public transit payment operation by using the first virtual public transit card.

7. The device of claim 6, further comprising:
a first acquisition module (601) arranged to acquire a current position; and
an activation module (602) arranged to activate the first virtual public transit card, the first virtual public transit card being associated with the current position.

8. The device of claim 6 or 7, further comprising:
a second acquisition module (701) arranged to acquire preconfigured information of the unified card face; and
a display module (702) arranged to display the prepaid public transit card according to the information of the unified card face, wherein more than one virtual public transit card associated with the prepaid public transit card is locally stored.

9. The device according to claim 6, 7 or 8, wherein the first preset balance threshold comprises: a maximum single public transit consumption value of a target city or a double of the maximum single public transit consumption value of the target city.

10. The device of any of claims 6 to 9, further comprising:
a prompting module (801) arranged to, when it is determined that a balance of the prepaid public transit card is smaller than a second preset balance threshold, prompt a user to charge the prepaid public transit card.

11. A public transit payment device, **characterized in that** the device comprises:
a first determination module (901) arranged to determine that a balance of a first virtual public transit card associated with a prepaid public transit card is smaller than a first preset balance threshold;
a remittance module (902) arranged to, when it is determined that the balance of the first virtual public transit card associated with the prepaid public transit card is smaller than the first preset balance threshold, perform a remittance to a bank account associated with transportation card management equipment corresponding to the first virtual public transit card on the basis of the prepaid public transit card when a balance of the prepaid public transit card is larger than a second preset balance threshold, wherein the prepaid public transit card is associated with at least one virtual public transit card; and
a second sending module (903) arranged to send a second charging request to the transportation card management equipment corresponding to the first virtual public transit card, the second charging request comprising a remittance voucher and an identifier of the first virtual public transit card.

12. The device of claim 11, wherein the first determination module (901) is arranged to:
determine that the balance of the first virtual public transit card associated with the prepaid public transit card is smaller than the first preset balance threshold when a first charging request containing the identifier of the first virtual public transit card is received from a terminal;
or,
acquire a balance of each virtual public transit card according to historical charging data of a user and determines the first virtual public transit card of which the balance is smaller than the first preset balance threshold.

13. The device of claim 11 or 12, further comprising:
a third sending module (1001) arranged to, when it is determined that the balance of the prepaid public transit card is smaller than the second preset balance threshold, send a charging prompt to the terminal, wherein the charging prompt is arranged to prompt the user to charge the prepaid public transit card;
a charging module (1002) arranged to, when it is determined that the balance of the prepaid public transit card is smaller than the second preset balance threshold, deduct a preset charging amount from a financial account of the user associated with the prepaid public transit card, and charge the prepaid public transit card by using the preset charging amount.

14. The device of claim 11, 12 or 13, further comprising:
a third acquisition module (1101) arranged to acquire a latest usage time of each virtual public transit card;
a second determination module (1102) arranged to determine, as a second virtual public transit card, a virtual public transit card of which the latest usage time is earlier than a preset time threshold; and
a fourth sending module (1103) arranged to send a drawback instruction to transportation card management equipment corresponding to the second virtual public transit card, wherein the drawback instruction is arranged to cause the transportation card management equipment corresponding to the second virtual public transit card to draw a balance of the second virtual public transit card back to the prepaid public transit card.

15. A computer-readable storage medium having stored thereon computer instructions executed by a processor to implement the steps of the method of any one of claims 1-5.
